(19) Europäisches Patentamt
European Patent Office
Office européen des brevets

(11) Veröffentlichungsnummer: **0 386 597 A2**

# (12) EUROPÄISCHE PATENTANMELDUNG

(21) Anmeldenummer: **90103844.8**

(22) Anmeldetag: **28.02.90**

(51) Int. Cl.5: **C08L 65/00, C08L 51/00, //(C08L65/00,51:00), (C08L51/00,65:00)**

(30) Priorität: **04.03.89 DE 3907018**

(43) Veröffentlichungstag der Anmeldung: **12.09.90 Patentblatt 90/37**

(84) Benannte Vertragsstaaten: **AT BE CH DE DK ES FR GB IT LI NL SE**

(71) Anmelder: **RÖHM GMBH**
**Kirschenallee**
**D-6100 Darmstadt(DE)**

(72) Erfinder: **Siol, Werner, Dr.**
**Goerdelerweg 34**
**D-6100 Darmstadt-Eberstadt(DE)**
Erfinder: **Süfke, Thomas, Dr.**
**An der Fuchsenhütte 27**
**D-6101 Rossdorf(DE)**
Erfinder: **Terbrack, Ulrich**
**Berliner Strasse 3**
**D-6107 Reinheim 2(DE)**
Erfinder: **Müller, Reiner**
**Schillerstrasse 12**
**D-6083 Biebesheim(DE)**

## (54) Kunststoffmischungen.

(57) Die Erfindung betrifft Kunststoffmischungen mit hoher Lösemittelbeständigkeit, die Polyoxymethylen enthalten, aus

A) 2 - 98 Gew.-% eines Polymeren, das zu mindestens 80 Gew.-% aus der Monomereinheit --($CH_2$-O)- gebildet wird, und

B) 98 - 2 Gew.-% eines Polymeren das zu 20 - 90 Gew.-% aus einem Polymeren B1 besteht, das zu wenigstens 60 Gew.-% aus einem Monomeren der Formel

$$CH_2 = \overset{H}{\overset{|}{C}} - X - R \qquad (I)$$

worin R für einen Alkylrest mit 1 bis 3 Kohlenstoffatomen und

X für einen Rest $-O-\overset{O}{\overset{\|}{C}}-$ oder $-\overset{O}{\overset{\|}{C}}-O-$ steht, gebildet wird und zu 80 - 10 Gew.-% aus einem Polymeren B2 mit einer Glastemperatur Tg kleiner 0 Grad C, das wenigstens mit 5 Gew.-% der aus den Monomeren der Formel I gebildeten Polymerisats kovalent verbunden ist, besteht.

EP 0 386 597 A2

## Gebiet der Erfindung

Die Erfindung betrifft Kunststoffmischungen, die in bestimmtem Umfang thermoplastisch verarbeitbar sind, bestehend aus Polyoxymethylen einerseits und modifizierten Polyacrylaten andererseits.

### Stand der Technik

Die Beeinflussung der Eigenschaften polymerer Kunststoffe durch Beimischen anderer Polymerer mit komplementären Eigenschaften ist ein seit langem nicht ohne eindrucksvolle Erfolge angewendetes technisches Konzept. (Vgl. N.A.J. Platzer, Multicomponent Polymer Systems, Advances in Chem. Ser. 99, XI - XVIII, American Chemical Society, Washington 1971; H.F. Mark, Encyclopedia of Polymer Science and Engineering, 2nd Ed. Vol. 12, 399 bis 461, J. Wiley & Sons 1988). Häufig zielt die Abmischung auf eine Verbesserung der Schlagzäh-Eigenschaften eines Kunststoffs ab.
In anderen Fällen geht es bei der Abmischung darum, relativ teuere Kunststoffe durch preisgünstige Komponenten zu ersetzen. Bei Polyoxymethylen (POM) dürften es nicht so sehr Mängel im Eigenschaftsprofil als Preisüberlegungen sein, die eine Abmischung mit anderen Kunststoffen rechtfertigen.

Das Polyoxylmethylen hat gerade aufgrund seiner günstigen mechanischen Eigenschaften (hohe Härte, Steifheit, Zähigkeit bis hinab zu tiefen Temperaturen) sowie seiner Beständigkeit gegenüber Lösemitteln einen festen Platz unter den Konstruktionswerkstoffen gefunden. (Vgl. H. F. Mark et al., Encyclopädia of Polymer Science and Engineering, 2nd Ed. Vol. 1, pp. 42 - 61, J. Wiley 1986, Winnacker-Küchler Chemische Technologie, 4. Auflage, Bd. 6, Org. Technologie II, 4. Auflage, Carl Hanser, München 1982).

Die Literatur bietet eine Reihe von Beispielen für Abmischungen von Polyoxylmethylen mit anderen Kunststoffen, wobei offensichtlich ganz verschiedene technologische Ziele verfolgt werden, ohne daß indessen echte Verträglichkeit der Komponenten anvisiert oder gar erreicht wird. So beschreibt die DE-A 27 09 037 eine Beschichtungspaste für Geschoßtreibladungen, die aus einer Lösung von POM, Polymethylmethacrylat (PMMA) und Paraformaldehyd in Toluol gewonnen wurde. (Vgl. Chem. Abstr. 90, 206 733 h). Die Eigenschaft des POM Kristallfasern zu bilden, wurde verschiedentlich zur Herstellung faserverstärkter Kunststoffe ausgenutzt, u.a. auf Basis von PMMA (vgl. Chem. Abstr. 83, 148 276 m; Chem. Abstr. 87, 85985 u).
Relativ große Aufmerksamkeit erhielt die Verbesserung der Schlagzähigkeit des POM durch Abmischen mit Elastomeren, beispielsweise Acrylnitril-gepfropffem Ethylen-Propylen-Rubber (Chem. Abstr. 99, 187 894 c) oder MMA-gepfropftem Polybutadien (vgl. DE-A 34 41 547), bzw. Butadien-MMA-Blockcopolymeren (DE-A 24 20 300) oder Butadien-Styrol- bzw. Acrylnitril-Butadien-Styrol-Pfropf-Copolymeren (DE-A 19 31 392). Andere Schlagzähmodifikationen sind Acrylnitril-Styrol- oder Styrol-gepfropftes Polyoxymethylen (DE-A 26 59 357). In der JP-A 60,108 413 (Chem. Abstr. 104 6621 r) wird die Herstellung schlagzähen POM durch Polymerisation von Trioxan in Gegenwart eines Elastomeren z.B. eines Ethylen-Propylen-2-Hydroxyethylmethacrylat-Copolymeren empfohlen (vgl. auch Chem. Abstr. 103, 19 692 v). Die EP-A 115 373 empfiehlt den Zusatz eines multiphasischen vernetzten elastomeren Copolymerisats zu POM-Mischungen mit einem Alkyl-$C_{10-30}$-Fettsäure-$C_{2-7}$-Ester und Polymeren wie Caprolactam-Caprolacton-Copolymeren oder Polybutylmethacrylat, die mit dem Fettsäureester verträglich und gegenüber POM inert sind. In der (unveröffentlichten) deutschen Patentanmeldung P 38 05 052 werden verträgliche Polymermischungen aus Polyoxymethylen und 99,5 bis 0,5 Gew.-% eines Polymeren, das zu 40 bis 100 Gew.-% aus Methylacrylat oder Ethylacrylat besteht, beschrieben. Bereits in geringen Anteilen beeinflussen die Polyacrylatzusätze die Verarbeitbarkeit des POM in günstiger Weise.

### Aufgabe und Lösung

Es bestand die Aufgabe zu weiteren, elastisch modifizierten POM-Typen zu gelangen, wobei die hohe Kristallisationsneigung dieses Kunststoffs auch in der Mischung die Gebrauchseigenschaften bestimmen sollte. Die vorliegende Erfindung betrifft daher insbesondere thermoplastisch verarbeitbare Kunststoffmischungen KM mit ausgezeichneter Lösemittelbeständigkeit, die aufgebaut sind aus

A) 2 - 98 Gew.-%, vorzugsweise 2 - 50 Gew.-% eines polymeren, das zu mindestens 80 Gew.-% aus der Monomereinheit -($CH_2O$)-gebildet wird und

B) 98 - 2 Gew.-%, vorzugsweise 96 - 50 Gew.-% eines Polymeren das zu 20 - 90 Gew.-% aus einem Polymeren B1 besteht, das zu wenigstens 60 Gew.-%, bevorzugt 90 Gew.-% aus Monomeren der Formel

$$CH_2 = \overset{H}{\overset{|}{C}} - X - R \qquad (I)$$

worin R für einen Alkylrest mit 1 bis 3 Kohlenstoffatomen und

X für einen Rest $-O-\overset{\overset{O}{\|}}{C}-$ oder $-\overset{\overset{O}{\|}}{C}-O-$steht, und zu 80 - 10 Gew.-% aus einem bevorzugt chemisch vernetzten Polymeren B2 mit einer Glastemperatur Tg kleiner 0 Grad C, das wenigstens mit 5 Gew.-% des aus den Monomeren der Formel (I) gebildeten Polymerisats B1 kovalent verbunden, vorzugsweise gepfropft ist, besteht.

Von besonderem Interesse sind z.B. Mischungen KM mit einem Anteil der Komponenten A) im Bereich 2 - 40 Gew.-% und im Bereich 70 bis 98 Gew.-%, insbesondere 80 - 95 Gew.-%.

Nach vorliegenden Erkenntnissen werden besonders günstige Eigenschaften erzielt, wenn in den Kunststoffmischungen KM als Polymerkomponente A) ein typisches handelsübliches POM eingesetzt wird und wenn insbesondere als Komponente B) Polymerisate mit Kern-Schale-Aufbau, insbesondere durch Emulsionspolymerisation hergestellte Kern-Schalen-Polymerisate, angewendet werden.

Als Kernmaterial KP mit einer Glastemperatur < 0 Grad C, vorzugsweise < -10 Grad C kommen an sich bekannte Elastomere in Frage, vornehmlich ausgewählt aus der Gruppe der Polyacrylate, Polysiloxane, Polyolefine, insbesondere Polybutadiene, Polyisoprene, Ethylen-Propylen-Elastomere (EPDM, EPTM).

Die Polyoxymethylenkomponente A)

Unter Polyoxymethylen (POM) werden im Rahmen der vorliegenden Erfindung die im "Stand der Technik" s. oben diskutierten Polymeren verstanden, die ganz oder zu mindestens 80 Gew.-% aus $-(CH_2-O)-$Einheiten aufgebaut sind, d.h. die üblicherweise ebenfalls unter dem Begriff POM zusammengefaßten Homo- oder Copolymerisate, insbesondere in den stabilisierten, speziell den handelsüblichen Formen. Bekanntlich kann die Herstellung von POM-Homopolymeren beispielsweise durch anionische Polymerisation von Formaldehyd z.B. in Suspension und anschließende Endgruppenstabilisation erfolgen, wobei Trialkylamine oder Alkalialkoxide als Initiatoren dienen. Die Stabilisierung kann z.B. durch Acylierung oder Veretherung der endständigen Halbacetal-OH-Gruppen beispielsweise mit Säureanhydriden wie Acetanhydrid oder mit Epoxiden wie Ethylenoxid erfolgen.
Copolymerisate vom POM-Typ können beispielsweise durch kationische Suspensionspolymerisation, ausgehend z.B. von Formaldehyd oder Trioxan mit Lewissäuren wie $BF_3$, $HClO_4$ gewonnen werden. Als Copolymerisationskomponente für POM kann z.B. Ethylen-oxid, Dioxolan oder Butandiolformal (Massengehalt ca. 2 - 4 %) dienen. Als Suspensionsmedium dient meist ein aliphatischer oder cycloaliphatischer Kohlenwasserstoff. Die mittlere Molekülmasse (Zahlenmittel) liegt im allgemeinen im Bereich zwischen Mn = 20 000 und Mn = 100 000, die Uneinheitlichkeit Mw/Mn bei ca. 2. Die Homopolymeren weisen einen höheren Kristallisationsgrad (bis 90 %) und somit etwas höhere Härte, Steifigkeit und Festigkeit als die Copolymeren auf.

Polyoxymethylen löst sich z.B. im Hexafluoracetonsesquihydrat und bei höheren Temperaturen im m-Kresol. Vorteilhafterweise werden - wie allgemein üblich - in der oben angegebenen Weise stabilisierte Polyoxymethylene eingesetzt. Ferner können die Polymermischungen KM bei der praktischen Anwendung an sich bekannte Zusatzstoffe wie Weichmacher, Gleitmittel, Farbstoffe und Pigmente, Filler sowie weitere Stabilisatoren in den üblichen Mengen, d.h. im allgemeinen < 20 Gew.-% bezogen auf die Polymermischungen KM enthalten. (Vgl. R. Gächter und H. Müller Taschenbuch der Kunststoff-Additive, Carl Hanser Verlag). Als POM- Handelsprodukte kommen z.B. die Typen ® DELRIN 500 F bzw. 900 F der Fa. DuPont bzw. die Typen ® CELCON der Celanese Engineering Resins oder ® HOSTAFORM der Ticona Polymerwerke, Kelsterbach infrage.

Die Komponente B).

Bei einer vorteilhaften Ausführungsart bedient man sich bei der Herstellung der Komponente B) der Emulsionspolymerisation (vgl. Houben-Weyl, 4. Auflage, Bd. XIV/I, 133 - 491, Georg Thieme Verlag 1961; H.F. Mark et al. Encyclopedia of Polymer Science and Engineering, 2nd Ed., Vol 6, pp 1 - 51; J. Wiley & Sons 1986; H. Rauch-Puntigam, Th. Völker, Acryl- und Methacrylverbindungen; Springer Verlag 1967). Die Glastemperatur der aus den Monomeren gebildeten Homo- bzw. Copolymerisate ist bekannt bzw. läßt sich berechnen (vgl. Brandrup-Immergut Polymer Handbook, 2nd Ed. J. Wiley, Vieweg-Esser, Kunststoff-Handbuch, Band IX, pg 333 - 340, Carl-Hanser Verlag 1975).
Die Herstellung von Kern-Schale-Latices vom Acrylattyp als Komponente B) kann z.B. in Anlehnung an US-A 4 199 486, das EP 65 069, bzw. US-A 4 710 525 und US-A 3 787 522, US-A 3 943 190, US-A 3 914 338, US-A 4 052 525, US-A 3 985 703 vorgenommen werden.

Der Aufbau der Polymerisate B) aus einem Kernmaterial KP und dem Schalenmaterial auf Acrylatbasis kann beispielsweise mit den folgenden Verfahren erreicht werden:
Dabei werden die das Kernmaterial bildenden Monomeren in wäßriger Emulsion in der ersten Verfahrensstufe polymerisiert (= Polymer B2). Wenn

die Monomeren der ersten Stufe im wesentlichen auspolymerisiert sind, werden die Monomerbestandteile des Schalenmaterials unter solchen Bedingungen zu dem Emulsionspolymerisat zugegeben, daß die Bildung neuer Teilchen vermieden wird. Dadurch wird das in der zweiten Stufe entstehende Polymerisat schalenförmig um das Kernmaterial herum gelagert. Ein günstiges Verhältnis der Schalendicke zur Größe des Kerns wird erhalten, wenn sich das Gewicht des Kernmaterials zum Schalenmaterial wie 1 : 3 bis 3 : 1 verhält. Durch geeignete Wahl der Emulgiermittelmenge kann die Teilchengröße in dem Sinne beeinflußt werden, daß die Teilchen um so größer werden, je kleiner die Emulgiermittelmenge ist. Die Teilchendurchmesser können z.B. im Bereich von 0,05 bis 5 µm liegen.

Als Monomere für das Kernmaterial KP finden in diesem Falle vorzugsweise Butylacrylat und 2-Ethylhexylacrylat Anwendung. Vorteilhafterweise stellt man das Kernmaterial KP unter Anwendung an sich bekannter monomerer Vernetzer her, vorzugsweise in Anteilen von 0,1 bis 10 Gew.-%, vorzugsweise 0,03 bis 3 Gew.-%, bezogen auf die das Kernmaterial bildenden Monomeren.
Als Vernetzer dienen wie üblich solche Verbindungen, die mindestens zwei vinylische Doppelbindungen im Molekül besitzen, beispielsweise die (Meth)acrylsäureester mehrwertiger Alkohole, wie z.B. Glykoldimethacrylat, Butandioldiacrylat, Tetraäthylenglykoldiacrylat, Trimethylolpropantriacrylat, Pentaerythrittetraacrylat weiter Allylmethacrylat u.a. mehr. Als Schalenmaterial bietet sich mit Vorteil Polymethylacrylat oder Polyethylacrylat an.

In der ersten Polymerisationsstufe, in der das Polymere B2, also das Kernmaterial entsteht, werden 0,01 bis 1 Gew.-%, bezogen auf die Wasserphase an anionischen, kationischen oder nicht-ionischen Emulgiermitteln, wie Natriumlaurylsulfat, Alkylbenzolsulfonate, Oxäthylierungsprodukte alkylierter Phenole oder deren neutralisierte Sulfierungsprodukte, verwendet. Die Polymerisation wird vorzugsweise bei Temperaturen zwischen 60 und 100 Grad C mit Hilfe wasserlöslicher Radikalbildner, wie Kalium- oder Ammoniumpersulfat oder Wasserstoffperoxid, ausgelöst. Vor Beginn der zweiten Polymerisationsstufe kann erneut Initiator zugesetzt werden, jedoch wird wenig oder gar kein zusätzliches Emulgiermittel in der zweiten Stufe verwendet. Besonders interessante technische Eigenschaften stellt man bei einem Emulsionspolymerisat mit folgendem Aufbau fest:
Kern: Copolymerisat aus Butylacrylat, Allylmethacrylat, Trimethylolpropantriacrylat im Gewichtsverhaltnis 98 : 1 : 1.
Schale: Polymethylacrylat (100 Gew.-%)

Beim Abmischen eines solchen Kern-Schale-Materials (24g) mit Polyoxymethylen (® DELVIN 500 F, 16 g) bei 195 Grad C auf einem Brabender-Mischer erhält man z.B. einen weißen, formstabilen Gummi mit sehr guter Lösungsmittelbeständigkeit.
Eine geeignete Polymerisatkomponente B) erhält man auch unter Verwendung von Ethyl-Propylen-Elastomeren wie EPDM oder EPTM.

Diese Elastomere sind an sich bekannt. Vgl. Ullmanns Encyclopädie der Techn. Chemie, 4. Auflage, Bd. 13, 619 -620, Verlag Chemie 1977; H.F. Mark et al. Encyclopedia of Polymer Science & Engineering 2nd Ed. Vol. 6, 523 - 564, J. Wiley & Sons 1986.
Im allgemeinen liegen dabei Ethylen und Propylen im molaren Verhältnis 5 : 1 bis 1 : 3,5 vor. Das Molekulargewicht liegt gewöhnlich im Bereich 100 000 bis 500 000. Die (Mit)verwendung weiterer α-Monoolefine im Bereich bis zu 16 Kohlenstoffatomen ist ebenfalls möglich. Weiter sind vorteilhaft zwischen 0,1 und 10 Mol-Prozent eines linearen Diens bzw. eines ungesättigten, verbrückten Ring-Kohlenwasserstoffs mit mindestens einer Kohlenstoff-Kohlenstoff-Doppelbindung copolymerisiert, beispielsweise ungesättigte Derivate des Bicyclo-(2,2,1)-heptans wie 5-Alkyliden-2-norbornen, Dicyclopentadien, Bicyclo-(2,2,1)-heptadien.
Im allgemeinen liegt der Gehalt an Doppelbindungen im Bereich 3 bis 20 Doppelbindungen, vorzugsweise bei 6 bis 15 Doppelbindungen auf 1 000 C-Atome. EPDM-Elastomere sind z.B. Gegenstand der US-A 2 933 480, 3 211 709, 2 093 620, 3 093 621, 3 113 115 und 3 300 450.

Die Pfropfung der Ethylen-Propylen-Elastomeren kann auf verschiedener Weise erfolgen, beispielsweise in organ. Lösungsmitteln oder im Monomeren. Im ersteren Fall wird beispielsweise Ethylen-Propylen-Dien-Elastomer (EPDM), zum Beispiel die Handelsprodukte ® 55 (Produkt der Fa. Copolymer) oder ® Polysar 585 in einem geeigneten Lösungsmittel wie Toluol, Chlorbenzol, Butylacetat, angewendet. Gegebenenfalls können ein oder mehrere vinylische Comonomere zusätzlich zu denjenigen der Formel (I) copolymerisiert werden, beispielsweise Styrol und alkylierte Derivate (insbesondere mit Alkylresten mit 1 -2 C-Atomen) (Vgl. US-A 3 981 958, US-A 3 671 608)

Man arbeitet vorzugsweise unter einem Schutzgas wie beispielsweise Stickstoff oder Kohlendioxid in den üblichen mit Rührern ausgestatteten Polymerisationsgefäßen. Als Initiatoren können die an sich bekannten, beispielsweise peroxidischen Initiatoren wie z.B. Benzoylperoxid, tert. Butylperoctoat, Di-tert-butylperoxid in Mengen von gewöhnlich ca. 0,01 bis 2 Gew.-% bezogen auf die Monomeren angewendet werden. Die Polymerisation wird meist durch Temperaturerhöhung, beispielsweise auf oberhalb 60 Grad C und bis zum Siedepunkt des Lösungsmittels in Gang gebracht und gewöhnlich auch bei erhöhter Temperatur durchgeführt. Vorteilhaft kann man die Monomeren plus Initiator dem

in der Vorlage befindlichen Elastomeren anteilweise zusetzen. Die Gesamtpolymerisationsdauer liegt in der Regel im Bereich mehrerer Stunden bzw. kann sich über einen bzw. mehr als einen Arbeitstag erstrecken. Lösungsmittel und unumgesetztes Monomer können vorteilhafterweise unter reduziertem Druck entfernt werden, besonders vorteilhaft mit Hilfe eines Extruders, beispielsweise eines Leistritz-Extruders. Zur Abtrennung des Polymeren aus einem Latex siehe auch DE-OS 29 17 321. Die Analyse der Pfropfanteile kann mittels der "Repräcipitations-Chromatographie"-Technik vorgenommen werden. (Vgl. J. Ma, D. Pang & B. Huand, J. Polym. Sci. A., Polym Chem. 24, 2853 - 2866 (1986); A. Gadkari & M.F.Farona, Polym. Bull 17, 299 - 306 (1987).

Weiter kann in gewisser Analogie zu EPDM/EPTM auch sogenannter "Soluble Rubber" als Elastomer eingesetzt werden.

Ferner sind im Sinne der vorliegenden Erfindung als Elastomere verwendbar: Butylkautschuk, (IIR, Vgl. Ullmann loc.cit, Bd. 13, S. 621 - 623; H.F. Mark et al. Encyclopedia of Polymer Science & Engineering 2nd Ed. Vol. 8, 423 - 487, J. Wiley & Sons 1987).
Polyisopren (IR, Vgl. Ullmann loc.cit. Bd. 13, S. 617 -621; H.M. Mark et al. Encyclopedia of Polymer Science & Engineering 2nd, Ed. Vol, 8, 487 - 564; J. Wiley & Sons, 1987).
Polybutadien (BR, vgl. Ullmann loc.cit. Bd. 13, S. 602 -605, H.F. Mark et al. Encyclopedia of Polymer Science & Engineering 2nd Ed. Vol. 2, 537 - 590. J. Wiley & Sons, 1987).
Des weiteren sind durch Polykondensation hervorgegangene Elastomere wie Silikonkautschuk (Q., Vgl. Ullmann loc.cit Bd. 13.628 - 631) anwendbar.
Für alle diese Elastomeren gilt jedoch, daß sie wenigstens teilweise mit den Polymeren aufgebaut aus den Monomeren der Formel $CH_2 = \underset{H}{\underset{|}{C}} -X-R$

kovalent verknüpft sind.

Die Herstellung der Mischungen geschieht in an sich bekannter Weise, beispielsweise durch mechanisches Mischen, vorteilhafterweise bereits zerkleinerter Partikel oder unter Zerkleinerung im Verlauf des Mischvorgangs und Aufschmelzen des Gemisches. Vorteilhafterweise kann die Mischung im Extruder vorgenommen werden.
(Vgl. deutsche Patentanmeldung P 37 43 199.4 vom 19.12.87)

Beim mechanischen Mischen erzeugt man zunächst Mischungen der Komponenten, wobei man vorteilhaft von bereits partikelförmigen Substanzen ausgeht, üblicherweise unter Verwendung langsam laufender Mischaggregate wie z.B. Trommel-, Rhönrad-, oder Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter).
Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine andere vorteilhafte Ausführungsform stellt das Mischen von Dispersionen (Emulsionen) der Bestandteile und nachfolgende Entfernung der flüssigen Phase, beispielsweise durch Abquetschen im Extruder dar.

Die Komponente B der KM besteht zu 80 - 10 Gew.-% aus den oben genannten Elastomeren mit einer Tg < 0 Grad C und zu 20 - 90 Gew.-% aus Polymeren, die zum überwiegenden Teil, insbesondere zu wenigstens 60 Gew.-%, bevorzugt zu 90 Gew.-% und ganz besonders bevorzugt gänzlich aus Monomeren der Formel

$CH_2 = \overset{H}{\overset{|}{C}} -X-R$, worin R für einen Alkylrest mit 1 - 3 Kohlenstoffatomen und X für einen Rest

$-O-\overset{O}{\overset{\|}{C}}-$ oder $-\overset{O}{\overset{\|}{C}}-O-$ steht, wobei die Bedingung gilt, daß das Polymere B1 zu wenigstens 5 Gew.-%, bevorzugt wenigstens 10 Gew.-% auf das Polymere B2 (das Elastomere) gepfropft ist.

Bevorzugt sind solche Polymeren B1, bei denen X für einen Rest

$-\overset{O}{\overset{\|}{C}}-O-$ steht. Besonders bevorzugt sind also Polymere B1, die zu wenigstens 60 Gew.-% aus den Monomeren Methyl-, Ethyl-, oder Propylacrylat aufgebaut sind, wobei Methyl-und Ethylacrylat besonders bevorzugt sind. Für den Fall, daß

$X = -O-\overset{O}{\overset{\|}{C}}-$ darstellt, ist Vinylacetat als Monomerbaustein des Polymeren B1 bevorzugt. Andere mit den Monomeren der Formel I copolymerisierbaren Monomere können in Anteilen bis zu 40 Gew.-%, bevorzugt in Anteilen < 10 Gew.-% im Polymeren B1 enthalten sein. Als solche weiteren Monomeren können z.B. Ethylen, Styrol, Methacrylsäureester von $C_1$-$C_{18}$-Alkoholen und andere Vinylverbindungen genannt werden. (Vgl. Ullmann, 3. Auflage, Bd. 14, 108 - 109, Urban & Schwarzenberg 1963). In einer ganz besonders bevorzugten Ausführungsform besteht das Polymere B1 zu wenigstens 96 Gew.-% aus den Monomeren der Formel I.

Vorteilhafte Wirkungen der Mischungen KM

Die vorteilhaften Wirkungen der Mischungen KM seien am Beispiel der Ausführungsart mit POM als Komponente A) und einem Kern-Schale-Polymerisat als Komponente B) (Copolymerisat aus Butylacrylat, Allylacrylat und Trimethylolpropantriacrylat 98 : 1 : 1 Gew.-Teile, wie oben beschrieben) dargestellt.

Eine solche Abmischung aus Kern-Schale-Polymerisat und POM zeigt auch bei geringem POM-Gehalt hohe Kristallinität des POM-Anteils. Dieser Umstand dürfte zumindest wesentlich zu der beobachteten Beständigkeit der erfindungsgemäßen Kunststoffmischungen KM gegenüber Lösungsmitteln beitragen.
Andererseits stellen KM mit einem hohen Anteil (70 -98 Gew.-%) an POM hinsichtlich Zähigkeit und Verarbeitungsverhalten verbesserte POM-Kunststoffe dar.

Die folgenden Beispiele dienen der Erläuterung der Erfindung:

Die Bestimmung der Schmelz-Viskosität ($\eta_s$) wird nach DIN 54 811 Verfahren B vorgenommen.

Der Teilchendurchmesser wird mit einem ® Coulter Nano-Sizer bestimmt. Desweiteren kann der Teilchendurchmesser auch mittels Lichtstreuung bestimmt werden.

Die Bestimmung der Reißdehnung und der Zugfestigkeit wird nach DIN 53 455 vorgenommen.

Die Shore-Härte wird nach DIN 53 505 bestimmt.

## BEISPIELE

### Beispiel 1

Herstellung eines Emulsionspolymerisates mit Kern-Schale-Struktur (= Komponente B).

In einem Poylmerisationsgefäß mit Rührer, Rückflußkühler und Thermometer werden
1,0 g Kaliumperoxodisulfat als Initiator und
0,06g Triisobutylphenol, ethoxyliert mit 7 Mol Ethylenoxid, sulfatiert, Natriumsalz als Emulgator in
630,0 g destilliertem Wasser vorgelegt und auf 80 Grad C erwärmt.

In dieser Vorlage dosiert man gleichmäßig unter Rühren innerhalb von 2 1/2 Stunden eine Emulsion I bestehend aus:
1631,0 g Butylacrylat
8,3 g Allylmethacrylat
8,3 g Propantrimethyloltriacrylat,
3,0 g Kaliumperoxodisulfat,
5,0 g des oben genannten Emulgators und
1877,0 g destilliertem Wasser.
(Zur Analyse wird eine Probe entnommen: die so hergestellte Polymerdispersion hat einen Teilchendurchmesser von 346 nm).

Direkt im Anschluß an Emulsion I wird eine Emulsion II in 1 1/2 Stunde bei 80 Grad C zudosiert, bestehend aus:
900,0 g Methylacrylat
2,0 g Kaliumperoxodisulfat
1,5 g des oben genannten Emulgators
1345,0 g destilliertem Wasser.
Nach dem Abkühlen auf Raumtemperatur resultiert eine Polymerdispersion mit einem Feststoffgehalt von 39,8 %. Teilchendurchmesser: 386 nm.

Zur Gewinnung des Polymerisatfeststoffes wird die Dispersion 48 Stunden bei -16 Grad C eingefroren. Nach dem Auftauen wird der Feststoff abgetrennt, dreimal mit Wasser gewaschen und im Vacuum bei 50 Grad C getrocknet.

### Beispiel 2

Herstellung und Charakterisierung der Kunststoffmischungen KM

Komponente A: POM

Komponente B: Emulsionspolymerisat mit Kern-Schale-Aufbau

Komponente B2: Polybutylacrylat vernetzt mit 0,5 Gew.-% Allylmethacrylat und 0,5 Gew.-% Trimethylolpropantriacrylat.

Komponente B1: Polymethylacrylat, teilweise gepfropft auf B2.

POM (® Delrin 500 F der Fa. Du Pont, vgl. Delrin Acetal Resins Design Handbook, E.I. Du.Pont de Nemours & Co. Inc. Wilmington, Del. 1967) wird in unterschiedlichen Anteilen mit dem Polymerisatfeststoff gemäß Beispiel 1 auf dem Extruder gemischt.
Die Kunststoffmischungen lassen sich ausgezeichnet verarbeiten.

### Beispiel 2a

Kunststoffmischung KM mit einem hohen Gehalt an Polyoxymethylen (POM)

Eine Mischung aus 95 Gew.-% POM (® Delrin 500 F der Fa. Du Pont) wird mit 5 Gew.-% des Feststoffes gemäß Beispiel 1 abgemischt.
Die Mischung läßt sich bei 180 Grad C gut zu Strängen extrudieren, demgegenüber zeigt reines POM keine Strangfestigkeit. Bei der Verarbeitungstemperatur von 180 Grad C (Belastung 5 N) wird

eine Viskosität $\eta_s$ von 447 Pa s gemessen, Strangaufweitung B: 27 %.

Trotz deutlich verbesserter Extrudierbarkeit zeigt die Kunststoffmischung KM noch die für POM gefundenen guten mechanischen Eigenschaften. So mißt man an gespritzten Normkleinstäben die folgenden Werte (Meßwerte für reines POM in Klammern).

Schlagzähigkeit (KJ/m$^2$): ohne Bruch (74,3)
Kerbschlagzähigkeit (KJ/m$^2$): 6,1 (5,8)
VST (gemessen an einem 3 mm dicken Spritzling) (Grad C): 154 (160) (Vicat B, 16 Stunden 80 Grad C).

Beispiel 2b

Kunststoffmischung KM mit einem geringen Gehalt an Polyoxymethylen (POM)

90 Gew.-Teile des gemäß Beispiel 1 erhaltenen Feststoffes werden mit 10 Teilen POM (® Delrin 500 F) gemischt und granuliert. Daraus wurden einerseits Stränge extrudiert (Meßwerte: Reißspannung: 1,4 MPa, Reißdehnung: 164 %) andererseits wurde das Material zu Formen verpresst und zu 60 x 40 x 3 mm großen Formkörpern gespritzt (Meßwerte: Zugfestigkeit: 1,58 MPa, Reißdehnung: 179 %, Shorehärte A: 34).

Bei vergrößertem POM-Anteil werden Formkörper von erhöhter Festigkeit erhalten.

**Ansprüche**

1. Kunststoffmischungen mit hoher Lösemittelbestandigkeit, die Polyoxymethylen enthalten,
dadurch gekennzeichnet,
daß die Kunststoffmischungen KM aus
A) 2 - 98 Gew.-% eines Polymeren, das zu mindestens 80 Gew.-% aus der Monomereinheit -($CH_2$-O)-gebildet wird, und
B) 98 - 2 Gew.-% eines Polymeren das zu 20 - 90 Gew.-% aus einem Polymeren B1 besteht, das zu wenigstens 60 Gew.-% aus einem Monomeren der Formel

$$CH_2 = \overset{\displaystyle H}{\overset{|}{C}} - X - R \qquad (I)$$

worin R für einen Alkylrest mit 1 bis 3 Kohlenstoffatomen und

X für einen Rest $-O-\overset{\displaystyle O}{\overset{\|}{C}}-$ oder

$-\overset{\displaystyle O}{\overset{\|}{C}}-O-$ steht, gebildet wird und zu
80 - 10 Gew.-% aus einem Polymeren B2 mit einer Glastemperatur Tg kleiner 0 Grad C, das wenigstens mit 5 Gew.-% der aus den Monomeren der Formel I gebildeten Polymerisats kovalent verbunden ist, bestehen.

2. Kunststoffmischungen KM gemäß Anspruch 1, dadurch gekennzeichnet, daß das Polymere B2 ausgewählt ist aus der Gruppe der elastomeren Polyacrylate, Polysiloxane, Polyolefine.

3. Kunststoffmischungen KM, gemäß den Ansprüchen 1 - 3, dadurch gekennzeichnet, daß das Polymere B2 chemisch vernetzt ist.

4. Kunststoffmischungen KM, gemäß Anspruch 1 und 3, dadurch gekennzeichnet, daß als Komponente B) Polymerisate mit Kern-Schale-Aufbau eingesetzt werden.

5. Kunststoffmischungen KM gemäß den Ansprüchen 1 - 4, dadurch gekennzeichnet, daß als Monomeren der Formel I Ethylacrylat, Methylacrylat, Propylacrylat, Isopropylacrylat, Vinylacetat oder Vinylpropionat verwendet werden.

6. Kunststoffmischungen KM gemäß Anspruch 1, dadurch gekennzeichnet, daß die Komponente B) durch Emulsionspolymerisation hergestellt worden ist.